(19) Europäisches Patentamt
European Patent Office
Office européen des brevets

(11) **EP 1 387 522 A2**

(12) **EUROPEAN PATENT APPLICATION**

(43) Date of publication:
**04.02.2004 Bulletin 2004/06**

(51) Int Cl.⁷: $H04L\ 9/08$

(21) Application number: **03254459.5**

(22) Date of filing: **16.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.07.2002 US 205344**

(71) Applicant: **MATSUSHITA ELECTRIC INDUSTRIAL CO., LTD.**
**Kadoma-shi, Osaka 571-8501 (JP)**

(72) Inventors:
• **Perkins, Gregory M.**
  **Pennington, New Jersey 08534 (US)**
• **Bushmitch, Dennis**
  **Somerset, New Jersey 08873 (US)**
• **Bhattacharya, Prabir**
  **Plainsboro, New Jersey 08536 (US)**

(74) Representative: **Atkinson, Ralph et al**
**Atkinson Burrington**
**25-29 President Building**
**President Way**
**Sheffield S4 7UR (GB)**

(54) **Apparatus and method for securing a distributed network**

(57)    An apparatus and method for secure data handling in a distributed network is implemented by a secure agent connected by a secure channel to a primary communication unit, secondary communication unit, and clients. The primary communication unit and secondary communication units are connected to separate keystores having keys. A method using distributed keys for encryption and decryption is disclosed. Another method utilizes multiple-time keys.

EP 1 387 522 A2

Figure 1

## Description

### FIELD OF THE INVENTION

The present invention relates to securing network data and more particularly to secure storage and communication of data in a distributed networking environment.

### BACKGROUND OF THE INVENTION

Sensitive data is being increasingly stored and processed in networked environments. Networks typically range from small and private local area networks to massively distributed public networks like the internet. Wide availability and use of networks has led to an increased risk of data-piracy. Data pirates try to intrude into networks in order to impermissibly access valuable data. Such data piracy is an ever-present security threat for owners of data that is stored or transmitted over a network. Furthermore, cyber-terrorism presents a wider challenge for security managers. Cyber-terrorists operate across borders using internet or other networks targeting both networks and data that is stored or transmitted over the networks.

Evolution of large networks has led to the need of distributed file systems. A typical distributed file system is designed to facilitate mass database storage and retrieval. The main concern for a distributed file system is to organize the storage and access of distributed content rather than ensuring optimal security for the content. Known systems for securing distributed file systems generally operate within the realm of relatively simple client-server architecture, and not across all types of distributed file systems. Thus, there is a need for a system and method that provide secure data storage and access in any operating environment, and particularly in a distributed operating environment.

Wide varieties of attacks on the network security mechanism are possible in a given distributed environment. Typical examples of such network attacks are described next. Digital content is frequently stored in encrypted forms that are encrypted using encryption keys. An attacker typically attempts to obtain the secret keys used to encrypt the data. Once the attacker has obtained the secret keys, he or she can then easily decrypt the encrypted data.

Another type of attack involves stealing data by intercepting it during the decryption process. A possible solution for such an attack would be to use a one-time password mechanism. Here, a trusted or secure agent in the network uses the current one-time password each time it accesses the main information server and the proxy server. This method makes only the communications unique, but not the data that is communicated. An attacker could break into either the secure agent or the main information server to crack the function that is used to generate the one-time passwords, and need not break both the systems. In addition, there is an ever-present possibility of the attacker breaking the secure communication channels, and finding out the function used to generate the secure communications. Thus, there is a need for an operating environment, preferably a distributed operating environment that is secure against a wide-variety of attacks.

While distributed networks generally face security problems, certain specific types of distributed networks face acute problems. One such specific type of distributed network is the distributed media storage and retrieval network. Media like movies, music, images etc., are one of the favorite domains of data pirates, and hence give rise to a need for a secure distributed environment useful for storing or retrieving media content. Thus, there is a need for a secure distributed network environment generally. in particular, there is a need for a secure distributed media server as a basic part of the network.

### SUMMARY OF THE INVENTION

The present invention is an apparatus and method for secure data handling in distributed network environments. The apparatus consists of a secure agent that is connected to a primary information communication unit and the secondary communication unit. A communication unit can be configured in multiple ways. The communication unit can be any electronic device having at least a two-way network communication capability for receiving, processing and/or transmitting messages in a given network. The secure agent is also connected to clients. All of the above described components of the system are connected with a secure communication channel that uses state of the art security mechanism. The primary and secondary communication units have independent key-stores associated with them.

The system and the method are designed to prevent and resist many types of attacks. First typical type of attack involves the attacker stealing the secret keys. A method of distributed keys is used to resist such attacks. Distributing the key information will force the attacker to steal all the distributed key information, the encryption function and the key generation function in order to reveal the real data. Another typical attack involves deceptively interfering with communications. A method of k-time keys is used to resist such attacks.

An embodiment of the invention operates in a media distribution environment and protects the media that is stored and distributed in a networked environment.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

BRIEF DESCRIPTION OF THE DRAWINGS

The present invention will become more fully understood from the detailed description and the accompanying drawings, wherein:

Figure 1 shows a representation of a secure system 10;

Figure 2 is a flowchart for the encryption process in an embodiment using key distribution;

Figure 3 is a flowchart for the decryption process in an embodiment using key distribution;

Figures 4a and 4b are flowcharts for the encryption process in an embodiment using 'k-time keys'; and

Figures 5a and 5b are flowcharts for the decryption process in an embodiment using 'k-time keys'.

DETAILED DESCRIPTION OF THE PREFERRED EMBODIMENTS

The following description of the preferred embodiment(s) is merely exemplary in nature and is in no way intended to limit the invention, its application, or uses.

Network environments are prone to attacks that target their security. Attack scenarios discussed hereinafter are non-limiting examples of the different types of attacks covered by the present invention. For example, in a typical type of attack faced by the distributed network environments, the attacker attempts to steal the secret keys and can then decrypt the encrypted data stored on the network using the stolen secret keys. The present invention employs a technique that distributes secret key information spatially across multiple key-sets to eliminate the possibility of an attacker decrypting the data using only a single set of keys. In another type of attack, the attacker attempts to deceptively interfere with the communications. The present invention utilizes 'k-time keys' described hereinafter to resist such attacks.

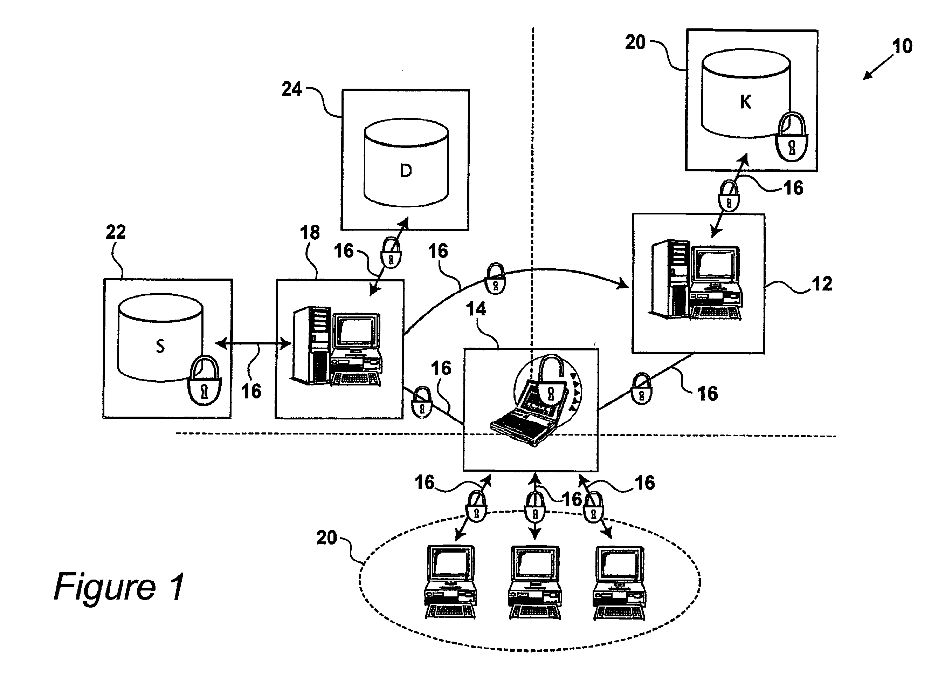

Figure 1 shows a representation of a secure system 10. A communication unit used in the system can be any electronic device having at least two-way network communication capability for receiving, processing and/or transmitting messages in a given network. For example, the communication unit can be a server in the given network. A primary communication unit 12 operates as a principal source of stored information. Smallest unit of data storage on the primary communication unit 12 is a block, and multiple blocks comprise a storage set which in turn is a subset of the overall data set.

A secure agent 14 is connected to the primary communication unit 12 by a secure channel 16. The secure channel 16 further connects the secure agent 14 to a secondary communication unit 18. One of the functions of the secondary communication unit 18 is to operate as a proxy communication unit. The primary communication unit 12 is preferably configured as a source of the information or content. The secure channel 16 also connects clients 20 to the secure agent 14.

The secure system 10 may include multiple secure agents 14. The secure agent 14 can communicate with other system 10 elements in a variety of ways, for example, by using packet based protocol, streaming protocol or a mixed protocol. Those skilled in the art will appreciate that the transmission method would be selected depending upon a particular configuration of the system, and the choice of any particular transmission mechanism does not limit the invention. The present invention designates the secure agent 14 as the nodal point where most (or all) of the required encryption and decryption is done. Therefore, the security concerns for the information content are moved away from the primary communication unit 12 and the secondary communication unit 18 toward the secure agent 14.

Secure agent 14 is the focal point for security concerns and hence should preferably be configured as described next. The hard-drive space on the secure agent should be minimal and just sufficient to store the operating/control program. The encryption/decryption process should be done in a volatile random-access memory and the data that is being processed need not be stored on the hard-drive. The hardware should be made tamper resistant. A dedicated integrated circuit, for example a VLSI chip, which contains its own secret keys and provides dedicated encryption/decryption should be used. A secure bootstrap device should be used to load the boot-up code. The boot-up code should be stored in an encrypted form within the hardware. The encrypted boot-up code can be used to authenticate the whole system and the operating system.

Secure channel 16 can be reinforced by a variety of methods. For example, Secure Sockets Layer (SSL) can be used to secure the channel 16. Alternately, a virtual private network (VPN) based mechanism can be used to secure the channel 16. Preferably, a state-of-the-art mechanism providing best security features should be used to secure the channel 16. Different sections of the secure channel 16 may be secured by different protocols or security mechanisms.

The primary communication unit 12 is connected to a K-keys storage 20 for storing K-keys (not shown). The secondary communication unit 18 is connected to a S-keys storage 22 for storing S-keys (not shown). The secondary communication unit 18 is connected to a data-store 24. The primary communication unit 12 can either internally incorporate data-stores or be connected to external data-stores via a secure channel. The designation of sever 12 as 'primary' and communication unit 18 as 'secondary' is for the sake of clarity and for distinguishing both the communication units. Those skilled in the art will appreciate that the designation of communication units as primary and secondary is non-limiting.

Operation of the secure system 10 is described next. The client 20 makes a request for information to the secure agent 14. The secure system 10 serves the client 20's requests by accessing the information stored on the secondary communication unit 18 through the secure agent 14. The secondary communication unit 18 precedes serving of the client 20's request by a process of transferring information from the primary communication unit 12 and storing it on the data-store 24. The process of transferring involves encryption, which is described below. Alternately, the request for storing the information from the primary communication unit 12 can be initiated from the primary communication unit 12 itself. In a typical scenario, the primary communication unit 12 will be serving the content from the content provider. Primary communication unit 12 will initiate the process of storing its selected content on the secondary communication unit 18. The process of transferring is described below.

The primary communication unit 12 does not directly transfer information to the secondary communication unit 18. Instead, the primary communication unit operates via the secure agent 14 to transfer information to the secondary communication unit 18. The primary communication unit 12 opens a secure communication session to the secure agent 14 using the secure channel 16. The secure agent 14 queries the primary communication unit 12 for information about the file or data set to be transferred. The secure agent 14 sends a special request to the secondary communication unit 18 for storing the current storage set in an encrypted form.

The secondary communication unit 18 determines the physical storage locations on the data-store 24 that will be used to store the current encrypted storage set. The secondary communication unit 18 then determines a secret key s; for each storage set that constitutes the overall data set, where $s_i \in \{S\}$ a set of S-keys. The secondary communication unit 18 sends each key s; and each storage set location information to the secure agent 14.

The secure agent 14 requests the primary communication unit 12 to generate a set of K-keys {K} having the number of keys equal to the number of keys in the set {S} of S-keys. The primary communication unit sends the information to be encrypted, i.e. the data-set D, and the set of K-keys {K} to the secure agent 14. The secure agent 14 then proceeds to encrypt the data-set D using a suitable method. The secure agent 14 sends the encrypted data to the secondary communication unit 18, which stores the incoming encrypted data. Finally, the secondary communication unit 18 sends a signed certificate to the primary communication unit 18 over the secure channel 16 confirming the successful storage of the encrypted content.

The description of the system 10 here is in the context of an example showing distribution of keys from two key-sets. The present invention covers the method of distributing two or more number of key-sets across multiple locations. Each additional location for distributed keys will add a little more security. Distributing keys across multiple locations makes the secure agent 14 the only viable target for attacks. As the security at the secure agent 14 increases sufficiently, the keys should be distributed across multiple locations. Ideally, the degree of difficulty of breaking either the secure agent 14 or the key distribution should be approximately the same. Those, skilled in the art will readily appreciate that the present invention covers embodiments using multiple keys distributed over multiple locations.

An illustrative flowchart for the encryption method is described next. Those skilled in the art would appreciate that a variety of methods can be used to encrypt the dataset D and the choice of a particular method does not limit the present invention in any manner.

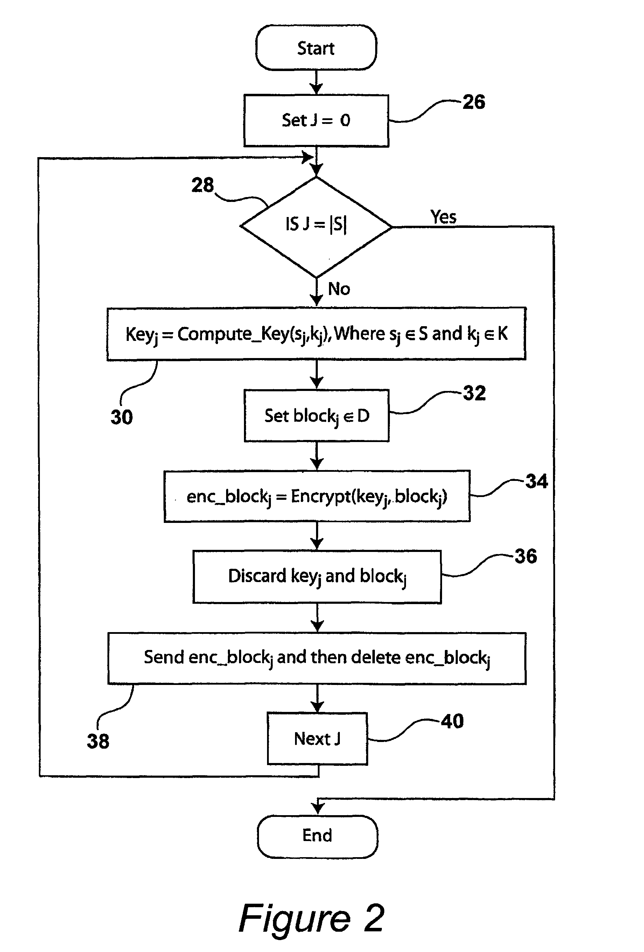

Figure 2 is a flowchart for the encryption process in an embodiment using key distribution. The steps 26 and 28 show a loop which repeats for values of J from 0 to the number of elements in the set {S} i.e., |S|. A $key_j$ is computed from the pair of $s_j$ and $k_j$ keys at step 30. $Block_j$ selected at step 32 is encrypted at step 34. This encryption process will typically use a block cipher to encrypt the $block_j$ using the secret $key_j$, though other encryption methods may also be employed. The encryption process may require additional hardware to provide required throughput for a given application. An important feature of the present invention is that the keys $s_j$ and $k_j$ that were used to encrypt the data-block are discarded at step 36 once the $block_j$ is encrypted. Discarding keys $s_j$ and $k_j$ after the $block_j$ is encrypted enhances security. Finally, the encrypted block is transmitted and thereafter deleted at step 38. The loop continues further iterations, if any, at step 40.

Referring back to the Figure 1, secure agent 14 agent will have no secret keys or data once the encryption session is complete. Network attacks that aim to steal the keys are strongly resisted by using a pair of keys that are discarded once the block is encrypted. Network security is further enhanced by the fact that encryption keys and data are never stored at a single location in the network. The key information is distributed through the space by storing K-keys on the K-keys storage 20 associated with the primary communication unit 12 and the S-keys on the S-keys storage 22 associated with the secondary communication unit 18. An attacker will be unable to decrypt the encrypted data if he or she is able to steal only one type of key.

The decryption process occurs when a client 20 makes a request for decrypted content to the secure agent 14, which in turn sends a special decryption request to the secondary communication unit 18 seeking the key-set {S}. The secure agent 14 also sends a request to the primary communication unit 12 for providing the key-set {K}. Once key-sets {K} and {S} are obtained from the primary communication unit 12 and the secondary communication unit 18 respectively, the decryption process can be initiated. It is necessary to obtain keys {K} and {S} as the key information spread over these two key-sets is distributed through space, i.e.,

kept on physically different communication units.

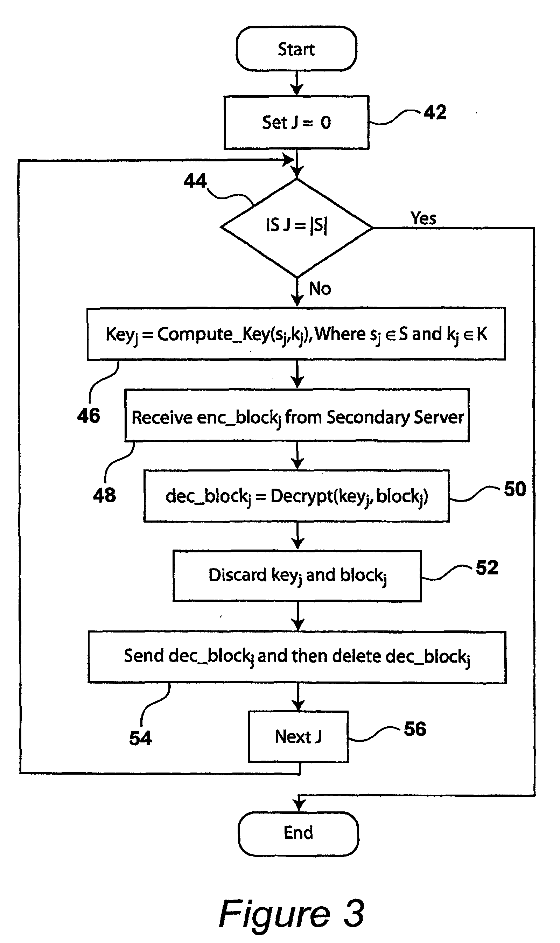

Figure 3 is a flowchart for the decryption process in an embodiment using key distribution. The decryption process is very similar to the encryption process. The steps 42 and 44 show a loop which repeats for values of J from 1 to the number of elements in the set {S} i.e., |S|. A key$_j$ is computed from the pair of s$_j$ and k$_j$ keys at step 46. Block$_j$ is received from the secondary communication unit 18 at step 48 and is then decrypted at step 50. An important feature of the present invention is that the keys s$_j$ and k$_j$ that were used to decrypt the data-block are discarded at step 52 once the block$_j$ is decrypted. Finally, the decrypted block is transmitted to the client 20 (as shown in Figure 1) and thereafter deleted at step 54. The loop continues further iterations, if any, at step 56. The decryption process may require additional hardware to provide required throughput for a given application.

The client 20 (as shown in Figure 1) preferably includes an output device like theatre projection systems, computer connected output devices, portable projection systems, televisions, personal audio-visual systems, audio output devices, and video output devices. The invention is not limited by the type of output device used and covers any suitable output device. Alternately, the client 20 may further store and process the information received for some non-output function.

As shown in Figure 1, the key sets {S} and {K} are transmitted over a secure channel 16. Though the secure channel 16 uses a state-of-the-art security mechanism, there is an ever present possibility, however insignificant, of a breach of the secure channel. Assuming that the attacker has breached the security mechanism for the secure channel 16, the attacker would be able to access the key information without having to break into any of the communication units or storage elements in the network. Further, the encryption function may be known to the attacker and he or she would be able to generate the secret key and decrypt the protected data. A variety of methods may be employed for secure key transmission. One of such possible methods is described next.

ElGammal key agreement is a variant of Diffie-Hellman encryption method and provides a one-pass protocol with unilateral key authentication given that the public key of the recipient is known to originator in advance. Let 'n' be the length in bits of each secret key in sets {S} and {K}. The main concept in the following description is to use the ElGamal method to pass the sets {S} and {K} to the secure agent 14. The secondary communication unit 18 and the primary communication unit 12 will first obtain the secure agent 14's ElGamal public keys and then perform a calculation to produce a value Φ, which is then passed to the secure agent 14. The secure agent 14 will then perform its own calculation to recover the secret keys.

In the ElGamal method's method described below, 'A' represents either the primary communication unit 12 or the secondary communication unit 18, and 'B' denotes the secure agent 14. A sends to B a single message allowing one-pass key agreement that results in a shared secret K known to both entities A and B.

ElGamal method:

1. One-time setup (key generation and publication). B does the following:

> Picks an appropriate prime $p$ and generator $\alpha$ of $Z_p{}^*$.
> Select a random integer $b$, such that $p/4 \leq b \leq p - 2$, and compute $\alpha^b \bmod p$.
> B publishes its public key ($p$, $\alpha$, $\alpha^b$), keeping private key $b$ secret.

2. *Protocol messages:*

$$A \rightarrow B: \alpha^x \bmod p \qquad (1)$$

3. *Protocol Actions*:

> (a) A obtains an authenticated copy of B's public key ($p$, $\alpha$, $\alpha^b$) A chooses a random integer x, such that $p/4 \leq x \leq p - 2$, and sends B message (1)
> A computes the key as $U = (\alpha^b)^x \bmod p$
> (b) B computes the same key on receipt of message (1) as $U = (\alpha^x)^b \bmod p$

In order to pass the set S, the secondary communication unit 18 will randomly generate each $s_j \in S$ as $x$ is generated in step (3a) above. It will randomly generate each $s_j$ once and save the result. The secondary communication unit 18 will just send $\alpha^\wedge(s_j) \bmod p$ to the secure agent which will then compute $U_j{}^s = (\alpha^\wedge(s_j))^b \bmod p$. Likewise for the primary communication unit 12, where the result will be $U_j{}^k = (\alpha^\wedge(k_j))^b \bmod p$. Then the trusted agent computes the final secret key, i.e., key$_j$ = $U_j{}^s \otimes U_j{}^k$, where $\otimes$ is the XOR function.

The benefit of the above-described approach is that a shared secret between the primary communication unit 12 or secondary communication unit 18 and the secure agent 14 is not necessary and that only the secret $b$ needs to be safe guarded at the secure agent 14.

The weakness of this system is that the attackers can sometimes replace a set of public keys with their own keys, a typical man-in-the-middie attack. A standard method of preventing such attack is to have the public keys stored with an authenticating agent. It is suggested that the values $\alpha^\wedge(s_j)$ and $\alpha^\wedge(k_j)$ be sent via a secure channel, which means both the secure channel and the public keys need to be successfully attacked . This approach at least doubles the required effort and expertise necessary for a successful attack and thus makes it harder for the attacker to compromise the system security. Finally, since $U_j^s$ and $U_j^k$ are never used by the primary communication unit 12 or the secondary communication unit 18, the secure agent 14 can also alter each $U_j^s$ and $U_j^k$ with a secret function f that is only known to the trusted agent. Basically, the final secret key $key_j = f(U_j^s) \otimes f(U_j^k)$ which would mean an attacker would also need to obtain or achieve the function $f$ in order to successfully determine the secret key used to encrypt the content.

Another powerful type of attack on distributed networks involves deceptively interfering with the communications. The attacker can access secret keys, encrypted data or both by deceptively interfering with the network communications. All such attacks typically involve the attacker capturing transmission between various network elements for making false requests through communication replay. To prevent such attacks it is necessary to make some of the communications and the decryption process to be unique for each requested use of the content.

The present invention employs 'k-time time keys' to provide high security against attacks involving deceptive interference with the communications. A set of 'k' secondary keys, i.e., SecKeys = $\{sk_1, ..., sk_k\}$ is generated. The 'k' number of secondary keys are used to encrypt 'k' selected blocks of content C. The set of selected blocks B is constructed as B = $\{b_1, ..., b_k\}$ and where B $\subset$ content C. Blocks of the set B are duplicated k times to form the set $B_{dup}$= $\{b_{11}, b_{12}, ..., b_{1k}, b_{11}, b_{21}, ..., b_{2k},..., b_{k1}, ..., b_{kk}\}$. Secondary key $sk_j$ from the SecKeys set is used to encrypt duplicated blocks $b_{1j}, ...,b_{kj}$. The secure agent 14 (as shown in Figure 1) will then use the encryption process as described next.

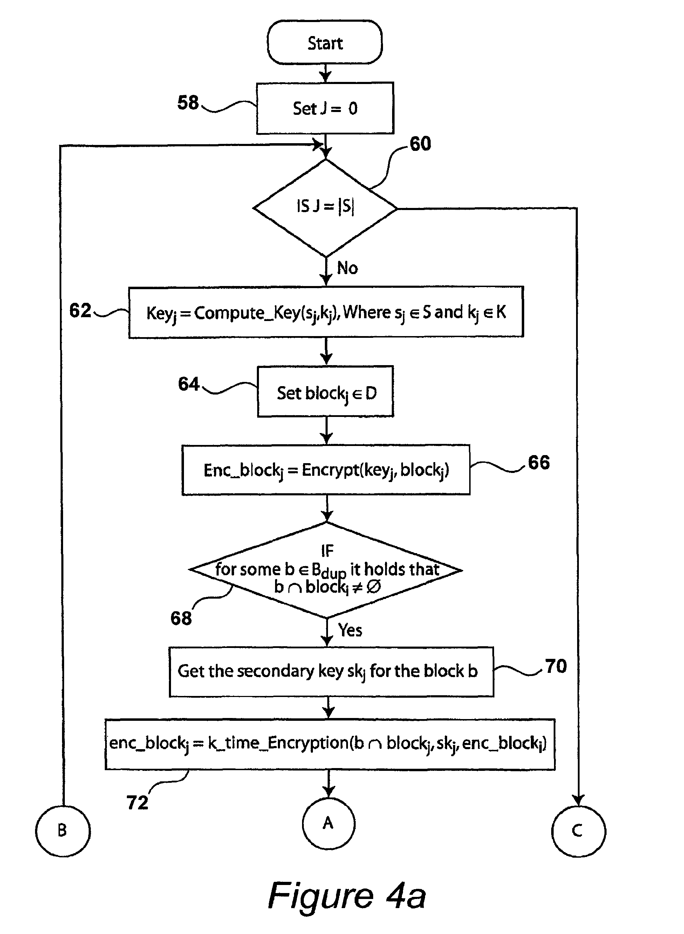

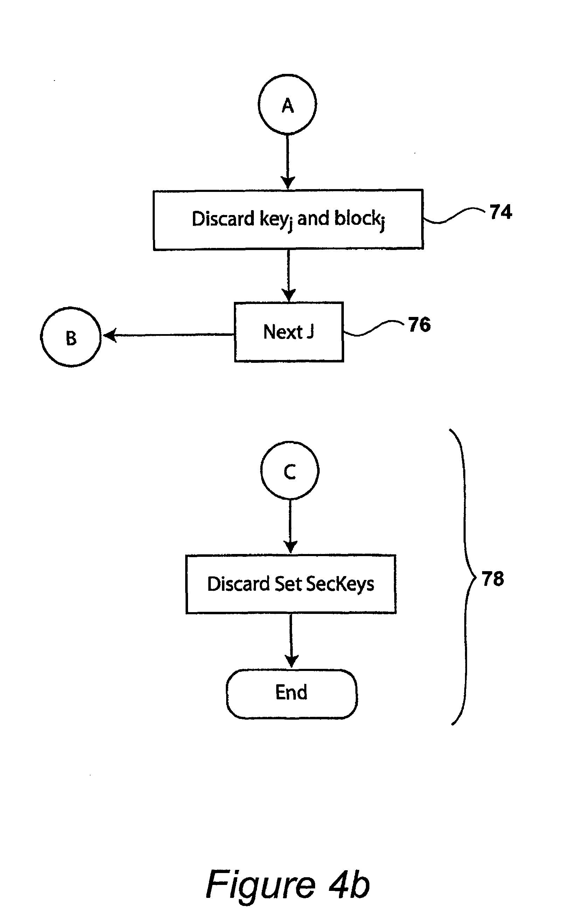

Figures 4a and 4b are flowcharts for the encryption process in an embodiment using 'k-tims keys'. A loop runs for values of variable J from 0 to |S| (number of elements in the set {S}) as shown at steps 58 and 60. A key is computed at the step 62 as $key_j$ by a key computation function taking $s_j \in S$ and $k_j \in K$ as arguments. A $block_j$ is selected as a subset of the whole data set D at step 64 and is typically the size of one stripe. Using the generated $key_j$ the currently selected $block_j$ is encrypted at step 66. A condition is checked at step 68 if for some 'b' it holds that b $\cap$ $block_j \neq \emptyset$ then the condition block is executed. Typically, it is true that b = $block_j$ , but for efficiency reasons this need not be true always. Therefore, only the subsection of enc_block$_j$ that represents the intersection of 'b' and $block_j$ would be encrypted with the secondary key $sk_j$. In the conditional block, the secondary key $sk_j$ is fetched for block 'b' at step 70. New enc_block$_j$ is generated at step 72 by the k_time_Encryption function that takes the b $\cap$ $block_j$ , $sk_j$, and enc_biock$_j$ as arguments. The $key_j$ and $block_j$ are discarded at step 74. The loop returns at step 76.

After the loop is terminated the set of secondary keys SecKeys is discarded at step 78.

The method described may result in increased file size, but the file size can be readily minimized by carefully selecting the blocks to be duplicated. For example, in MPEG2 scheme one can select blocks that define some of the more important decoding constants for duplication.

Referring back to Figure 1, the decryption process for k-time keys is described next. The client 20 makes a request for information content to the secure agent 14. The secure agent 14 makes a request to the primary communication unit 12 for the key-set {K}, the current key count 'j' (where j ≤ k), the secondary key $sk_j$, and set of data-blocks {B}. The primary communication unit 12 sends the requested information to the secure agent 14. The secure agent 14 then requests the secondary communication unit 18 for the key-set {3} and the secondary communication unit 18 sends the same. The secure agent 14 decrypts the data using the keys from key-sets {S}, {K} and the secondary key set $sk_j$.

Each decryption step uses a secondary key for each communication and thus making each communication between the secure agent and the primary communication unit 12 unique. It is possible to enhance security by distributing the secondary keys though space similar to that for S and K keys described above. By deleting the duplicated blocks associated with the secondary key $sk_j$ the data block is also unique for each encryption step.

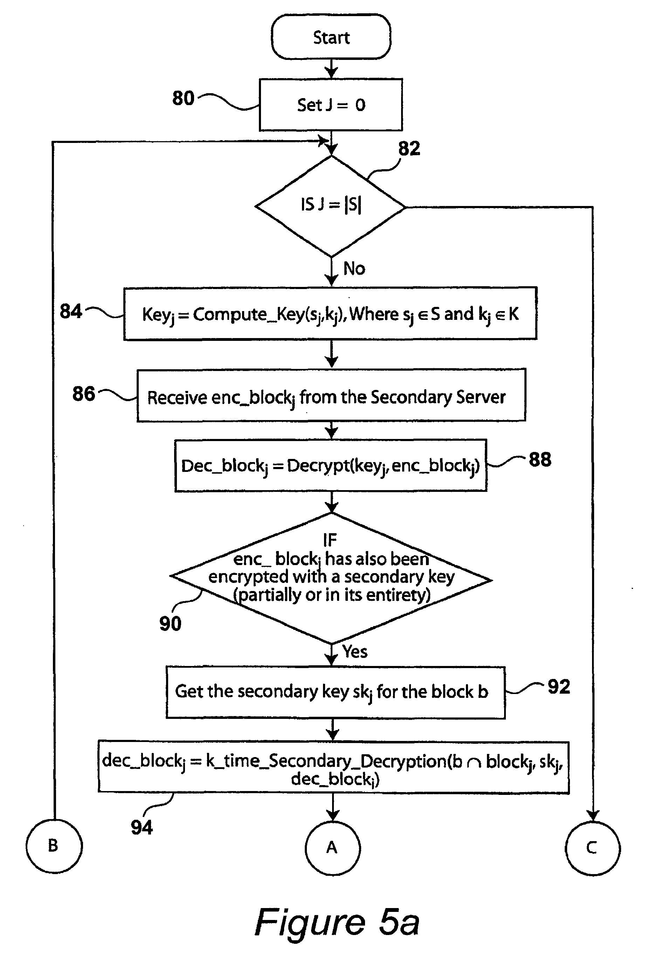

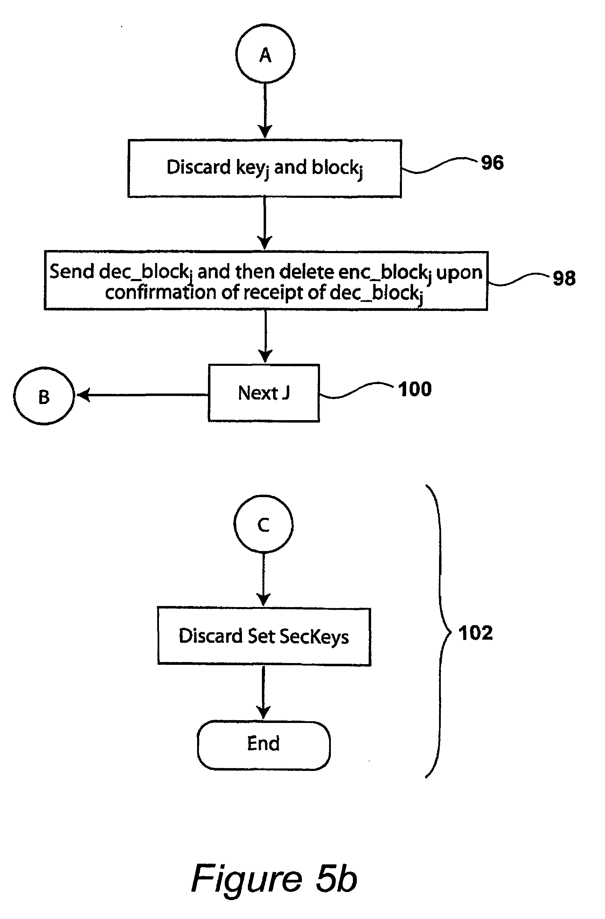

Figures 5a and 5b are flowcharts for the decryption process in an embodiment using 'k-time keys'. A loop runs for values of variable J from 0 to |S| (i.e., number of elements in the set {S}) as shown at steps 80 and 82. A key is computed at the step 84 as $key_j$ by a key computation function taking $s_j \in S$ and $k_j \in K$ as arguments. An encrypted block (enc_block$_j$) is received from the secondary communication unit, which is typically a media server. Using the generated $key_j$ the currently selected block$_j$ is decrypted at step 88.

A condition is checked at step 90 that if the encrypted block (enc_block$_j$) has also been encrypted with a secondary key, either partially or in its entirety, then the condition block is executed. Typically, it is true that b = biock$_j$ , but for efficiency reasons this need not be true always. Therefore, only the subsection of enc_block$_j$ that represents the intersection of 'b' and block$_j$ would be decrypted with the secondary key $sk_j$. In the conditional block, the secondary key $sk_j$ is fetched for the block 'b' at step 92. New dec_block$_j$ is generated at step 94 by the k_time_Secondary_Decryption function that takes the b $\cap$ block$_j$ , $sk_j$ , and dec_block$_j$ as arguments. The $key_j$ and block$_j$ are discarded at step 96. At step 98, the decrypted block is sent to its destination, and when a confirmation of receipt of decrypted block is received from the destination then the enc_block$_j$ is deleted. The loop returns at step 100. After the loop is terminated the set of secondary keys SecKeys is discarded at step 102.

The security method of the present invention using k-time keys provides high level security against attacks involving deceptive interference with communications. The k-times keys security method of the present invention provides low-cost protection against attacks involving deceptive interference with communications. Further, the k-time scheme allows a content provider to track and control the number of times it's content is accessed.

In a preferred embodiment, the invention is employed in a media distribution environment. The distributed environment comprises a set of distributed storage elements and a secure agent 14 as a central coordination entity. The media distribution environment is only shown as an illustration. The media distribution environment may have multiple secure agents. The clients of the media distribution environment are typically disallowed free access to the content. All requests from the clients must be routed via the secure agent.

A typical media distribution environment involves the content provider that supplies all the non-encrypted media content. The media communication unit typically is the secondary communication unit that may be placed in a theatre or as a communication unit at a video-on-demand intermediate service provider. The clients may typically be theatres, televisions or home computers where the content is ultimately consumed.

The description of the invention is merely exemplary in nature and, thus, variations that do not depart from the gist of the invention are intended to be within the scope of the invention. Such variations are not to be regarded as a departure from the spirit and scope of the invention.

**Claims**

1. An apparatus for secure data handling in a network, the apparatus comprising:

   a secure agent for combining a plurality of keys sourced from at least two key-sets for performing a cryptographic operation on the data soured from at least two communication units.

2. The apparatus of claim 1 wherein said cryptographic operation is selected from a group consisting of a encryption operation and decryption operation.

3. The apparatus of claim 1 wherein said two communication units associated with at least two key-stores.

4. The apparatus of claim 3 wherein said at least two key-stores storing at least two key-sets.

5. The apparatus of claim 3 wherein said two communication units are associated with said at least two key-stores by a secure communication channel.

6. The apparatus of claim 1 wherein said secure agent being connected to said at least two communication units and at least one client by a secure communication channel, said secure agent performing all principal encryption and decryption tasks.

7. The apparatus of claim 6 wherein said at least one client includes a media output device selected from a group consisting of theatre projection systems, computer connected output devices, portable projection systems, televisions, personal audio-visual systems, audio output devices, and video output devices.

8. The apparatus of claim 1 wherein said secure agent discarding said keys after performing said cryptographic operation.

9. The apparatus of claim 1 wherein said secure agent having minimal hardware components.

10. The apparatus of claim 1 wherein said secure agent including at least one program module for performing the encryption and decryption tasks.

11. The apparatus of claim 1 wherein said secure agent having at least one dedicated circuit element for performing the encryption and decryption tasks having secret keys.

12. The apparatus of claim 1 wherein said at least two communication units comprising a first communication unit functioning as a main content source and at least one second communication unit functioning as a proxy communication unit.

13. The apparatus of claim 1 wherein said secure agent comprises a plurality of initiation codes stored in an encrypted form in at least one hardware component.

14. The apparatus of claim 1 further comprising:

    at least two key-stores associated with said two communication units, said at least two key-stores storing at least two key-sets; and
    a secure channel connecting said communication units with said key-stores, said secure agent being connected to said communication units and at least one client by said secure channel, said secure agent performing all principal encryption and decryption tasks.

15. A method of encryption for secure data handling implemented over a network, the method comprising the steps of:

generating at least one encryption key corresponding to at least one data-block using a combination of at least two keys selected from at least two key-sets; and encrypting said data-block with said encryption key to generate an encrypted data-block.

16. The method of claim 15 further comprising the step of:

transmitting said two key-sets from at least two communication units to at least one secure agent using a secure channel, each one of said key-sets being stored on one distinct said communication units, said two communication units comprising a first communication unit and a second communication unit.

17. The method of claim 16 wherein said at least two key-sets being transmitted to said secure agent using a public key encryption method.

18. The method of claim 17 wherein said public key encryption method is the ElGamal variant of the Diffie-Heilman method.

19. The method of claim 16 further comprising the step of:

selecting said data-block from a data-set transferred from said first communication unit to said secure agent using said secure channel.

20. The method of claim 19 further comprising the step of:

transmitting said encrypted data-block from said secure agent to said second communication unit using said secure channel.

21. The method of claim 15 further comprising the step of:

discarding said data-block and the corresponding said encryption key.

22. The method of claim 15 wherein the wherein the encryption of said data-block is performed using at least one hardware component to enhance the encryption throughput.

23. A method of decryption for secure data handling implemented over a network, the method comprising the steps of:

generating at least one decryption key corresponding to at least one data-block using a combination of at least two keys selected from at least two key-sets, said data-block being an encrypted data-block; and decrypting said data-block with said decryption key to generate a decrypted data-block.

24. The method of claim 23 further comprising the step of:

transmitting said least two key-sets from at least two communication units to at least one secure agent using a secure channel, each one of said key-sets being stored on one distinct said communication units, said two communication units comprising a first communication unit and a second communication unit, said key-sets being stored on two distinct said communication units.

25. The method of claim 24 further comprising the step of:

selecting said one data-block from a data-set transferred from a given communication unit storing the encrypted content to said secure agent using said secure channel.

26. The method of claim 25 further comprising, the step of:

transmitting said decrypted data-block from said secure agent to an output device using said secure channel.

27. The method of claim 23 further comprising the step of:

discarding each of said data-block and the corresponding said decryption key.

28. The method of claim 23 wherein the encryption of said data-block is performed using at least one hardware components to enhance the decryption throughput.

29. A method of encryption for providing security against deceptive interference with communications, the method comprising steps of:

encrypting a data-block with at least one encryption key to generate an encrypted data-block; and encrypting a subset of said encrypted data-block with at least one secondary key.

30. The method of claim 29 further comprising the steps of:

computing said encryption key based on a combination of at least two keys selected from at least two key-sets.

31. The method of claim 29 wherein said key-sets being stored on at least two distinct communication units, said at least two key-sets received from said least two communication units over a secure channel, said two communication units comprising a first communication unit and a second communication unit.

32. The method of claim 31 wherein said secondary keys are distributed over distinct said communication units for increasing security.

33. The method of claim 31 further comprising the step of:

selecting at least one data-block from a data-set transferred from said first communication unit to said secure agent using said secure channel.

34. The method of claim 33 further comprising the steps of:

determining at least one selected block-set comprising a predetermined number of selected blocks chosen from said data-set, said blocks being duplicated for a pre-determined number of times; and
generating a predetermined number of said secondary keys, each one of said secondary keys corresponding to one of said selected blocks.

35. The method of claim 34 wherein said subset representing the non-empty intersection of a given selected block and said data-block.

36. The method of claim 35 further comprising the step of:

optimally choosing said selected blocks for reducing the size of said encrypted data-block.

37. The method of claim 34 further comprising the step of:

sending said encrypted data-block to said second communication unit.

38. The method of claim 29 further comprising the step of:

discarding said data-block and the corresponding said encryption key.

39. A method of decryption for providing security against deceptive interference with communications, the method comprising steps of:

decrypting a data-block with at least one decryption key to generate an non-encrypted data-block, said data-block being an encrypted data-block; and
encrypting a subset of said data-block with at least one secondary key.

40. The method of claim 39 further comprising the steps of:

computing said decryption key based on a combination of at least two keys selected from at least two key-sets.

41. The method of claim 39 wherein said key-sets being stored on at least two distinct communication units, said at least two key-sets received from said least two communication units over a secure channel, said two communication units comprising a first communication unit and a second communication unit.

42. The method of claim 41 wherein said secondary keys are distributed over distinct said communication units for increasing security.

43. The method of claim 41 further comprising the step of:

selecting at least one data-block from a data-set transferred from said first communication unit to said secure agent using said secure channel.

44. The method of claim 43 further comprising the steps of:

determining at least one selected block-set comprising a predetermined number of selected blocks chosen from said data-set, said blocks being duplicated for a pre-determined number of times; and
generating a predetermined number of said secondary keys, each one of said secondary keys corresponding to one of said selected blocks.

45. The method of claim 44 wherein said subset representing the non-empty intersection of a given selected block and said data-block.

46. The method of claim 44 further comprising the step of:

sending said encrypted data-block to said second communication unit.

47. The method of claim 39 further comprising the step of:

discarding said data-block and the corresponding said encryption key.

*Figure 1*

*Figure 2*

Start

Set J = 0  — 42

44

IS J = |S|  →  Yes

No

Key$_j$ = Compute_Key(s$_j$,k$_j$), Where s$_j$ ∈ S and k$_j$ ∈ K

46

Receive enc_block$_j$ from Secondary Server

48

dec_block$_j$ = Decrypt(key$_j$, block$_j$)  — 50

Discard key$_j$ and block$_j$  — 52

Send dec_block$_j$ and then delete dec_block$_j$

54

Next J  — 56

End

## Figure 3

```
                    ┌─────────┐
                    │  Start  │
                    └─────────┘
                         │
              ┌──────────▼──────────┐
        58 ───┤       Set J = 0     │
              └──────────┬──────────┘
                         │
                         │              ┌─ 60
                    ◇────▼────◇
                   ◇            ◇
                  ◇  IS J = |S|  ◇───────────────────┐
                   ◇            ◇                     │
                    ◇────┬────◇                       │
                         │ No                         │
    ┌────────────────────▼─────────────────────────┐ │
 62 │ Keyj = Compute_Key(sj,kj), Where sj ∈ S and kj ∈ K │ │
    └────────────────────┬─────────────────────────┘ │
                         │                            │
              ┌──────────▼──────────┐                 │
        64 ───┤   Set blockj ∈ D    │                 │
              └──────────┬──────────┘                 │
                         │                            │
         ┌───────────────▼────────────────┐           │
         │ Enc_blockj = Encrypt(keyj, blockj) │── 66   │
         └───────────────┬────────────────┘           │
                         │                            │
                    ◇────▼────◇                        │
                   ◇    IF     ◇                       │
                  ◇ for some b ∈ Bdup it holds that ◇  │
                  ◇   b ∩ blockj ≠ ∅                ◇  │
                   ◇          ◇                        │
              68 ───◇────┬───◇                         │
                         │ Yes                         │
       ┌─────────────────▼──────────────────┐          │
       │ Get the secondary key skj for the block b │── 70 │
       └─────────────────┬──────────────────┘          │
                         │                             │
  ┌──────────────────────▼──────────────────────────┐  │
  │ enc_blockj = k_time_Encryption(b ∩ blockj, skj, enc_blockj) │ │
  └──────────────────────┬──────────────────────────┘  │
                     72  │                              │
        (B)              (A)                         (C)
```

$Key_j = Compute\_Key(s_j, k_j)$, Where $s_j \in S$ and $k_j \in K$

$Enc\_block_j = Encrypt(key_j, block_j)$

IF for some $b \in B_{dup}$ it holds that $b \cap block_j \neq \emptyset$

$enc\_block_j = k\_time\_Encryption(b \cap block_j, sk_j, enc\_block_j)$

## Figure 4a

A

Discard key$_j$ and block$_j$ — 74

Next J — 76

B

C

Discard Set SecKeys

End

78

*Figure 4b*

```
                    ┌──────────────┐
                    │    Start     │
                    └──────┬───────┘
                           │
                           ▼
        80 ────────► ┌──────────────┐
                     │   Set J = 0  │
                     └──────┬───────┘
                            │
                            ▼                    82
                         ◇ IS J = |S| ◇ ──────────────► C
                            │ No
                            ▼
        84 ───► ┌──────────────────────────────────────────────┐
                │ Keyⱼ = Compute_Key(sⱼ,kⱼ), Where sⱼ ∈ S and kⱼ ∈ K │
                └────────────────────┬─────────────────────────┘
                                     ▼
        86 ───► ┌──────────────────────────────────────────────┐
                │  Receive enc_blockⱼ from the Secondary Server   │
                └────────────────────┬─────────────────────────┘
                                     ▼
                ┌──────────────────────────────────────────┐  88
                │ Dec_blockⱼ = Decrypt(keyⱼ, enc_blockⱼ)       │
                └────────────────────┬─────────────────────┘
                                     ▼
                         ◇ IF enc_blockⱼ has also been
                           encrypted with a secondary key
                           (partially or in its entirety) ◇
        90                           │ Yes
                                     ▼
                ┌──────────────────────────────────────────┐  92
                │ Get the secondary key skⱼ for the block b  │
                └────────────────────┬─────────────────────┘
                                     ▼
                ┌──────────────────────────────────────────┐
                │ dec_blockⱼ = k_time_Secondary_Decryption(b ∩ blockⱼ, skⱼ, │
                │                dec_blockⱼ)                  │
                └────────────────────┬─────────────────────┘
         94
      ( B )                        ( A )                     ( C )
```

$Key_j = Compute\_Key(s_j, k_j)$, Where $s_j \in S$ and $k_j \in K$

$Dec\_block_j = Decrypt(key_j, enc\_block_j)$

$dec\_block_j = k\_time\_Secondary\_Decryption(b \cap block_j, sk_j, dec\_block_j)$

# Figure 5a

$$A$$

Discard $key_j$ and $block_j$ — 96

Send $dec\_block_j$ and then delete $enc\_block_j$ upon confirmation of receipt of $dec\_block_j$ — 98

Next J — 100

$$B$$

$$C$$

Discard Set SecKeys — 102

End

*Figure 5b*